# EUROPÄISCHE PATENTSCHRIFT

(11) **EP 2 756 492 B1**
(45) Veröffentlichungstag und Bekanntmachung des Hinweises auf die Patenterteilung: **27.04.2016**
(21) Anmeldenummer: 12774939.8
(22) Anmeldetag: 14.09.2012
(51) Int. Cl.: G08G 3/00, G08G 3/02, H04B 7/185

(54) **UNTERSTÜTZUNGSSYSTEM**
SUPPORT SYSTEM
SYSTÈME AUXILIAIRE

(30) Priorität: 14.09.2011 DE 102011113153
(43) Veröffentlichungstag der Anmeldung: 23.07.2014
(73) Patentinhaber: Deutsches Zentrum für Luft- und Raumfahrt e.V., 51147 Köln (DE)
(72) Erfinder: BEHRENS, Jörg, 28355 Bremen (DE); SUHR, Birgit, 28211 Bremen (DE); HAUER, Lars-Christian, 28355 Bremen (DE)
(74) Vertreter: Aisch, Sebastian
(86) Internationale Anmeldenummer: PCT/EP2012/068094
(87) Internationale Veröffentlichungsnummer: WO 2013/037954

(56) Entgegenhaltungen:
- WO-A1-03/046603
- WO-A1-2008/148188
- WO-A2-2007/143478
- MIGUEL A CERVERA ET AL: "On the performance analysis of a satellite-based AIS system", SIGNAL PROCESSING FOR SPACE COMMUNICATIONS, 2008. SPSC 2008. 10TH INTERNATIONAL WORKSHOP ON, IEEE, PISCATAWAY, NJ, USA, 6. Oktober 2008 (2008-10-06), Seiten 1-8, XP031365880, ISBN: 978-1-4244-2572-3

## Beschreibung

Die Erfindung betrifft ein Unterstützungssystem zur Verkehrsunterstützung von Schiffen, die AIS-Schiffsempfangseinheiten zum Empfangen von Schiffsverkehrsdaten enthaltenden AIS-Funksignalen aufweisen. Die Erfindung betrifft ebenso ein Verfahren zur Verkehrsunterstützung von Schiffen mit derartigen AIS-Schiffsempfangseinheiten.

Seit dem Jahre 2000 ist das AIS (Automatic Identification System) von der Internationalen Seeschifffahrtsorganisation (IMO) als verbindlicher Standart festgelegt worden, um die Sicherheit des internationalen Schiffsverkehrs zu erhöhen. Dieses lokal begrenzte Funksystem dient dabei zum Austausch von Navigations- und anderen Schiffsdaten, die es den Schiffen ermöglichen sollen, einen umfassenden Überblick über den benachbarten Schiffsverkehr zu erhalten. Primäres Ziel ist dabei, Kollisionen zwischen Schiffen zu vermeiden.

Die einzelnen Schiffe senden mit Hilfe eines auf den Schiffen angeordneten AIS-Transponders ihre eigenen Schiffsdaten im Broadcast-Verfahren aus, die dann von den benachbarten Schiffen empfangen werden können. Durch den Empfang von Schiffsdaten verschiedener Schiffe in der Umgebung eines Schiffes lässt sich somit ein Überblick über den benachbarten Schiffsverkehr ableiten, so dass ein Schiff beispielsweise feststellen kann, in welche Richtung und mit welcher Geschwindigkeit benachbarte Schiffe, die beispielsweise aufgrund schlechter Sichtverhältnisse nicht sichtbar sind, fahren.

AIS ist so konzipiert, dass es abwechselnd auf zwei Kanälen im UKW-Seefunkbereich, nämlich zum einen auf 161,975 MHz und zum anderen auf 162,025 MHz, sendet. Die Aussendung der einzelnen AIS-Schiffsdaten erfolgt dabei in festen Zeitrahmen, deren Belegung selbstständig durch die betreffenden Teilnehmer abgestimmt wird (sogenanntes SOTDMA: Self organized time division multiple access).

Somit stehen pro Minute lediglich 2.250 Zeitschlitze zur Übertragung von Daten den einzelnen Teilnehmern zur Verfügung.

Die Funkreichweite von AIS von Schiff zu Schiff beträgt hierbei in etwa 20 bis 30 Seemeilen, was ein wenig mehr als der normalen Sichtweite auf hoher See entspricht. Zwar können Küstenstationen aufgrund ihrer höheren Position einen Umkreis von bis zu 100 km abdecken. Allerdings sind derartige Küstenstationen nur in hochfrequentierten Gebieten zu finden, bei denen sich die Unterhaltung einer derartigen Küstenstation aus wirtschaftlichen Gesichtspunkten lohnt.

Aufgrund der beschränkten Sichtweite sowie des verwendeten SOTDMA-Übertragungsprotokolls bilden die Schiffe, die sich gegenseitig sehen und empfangen können, eine AIS-Funkzelle, innerhalb derer die Teilnehmer kollisionsfrei senden und empfangen können. Die Teilnehmer der AIS-Funkzelle handeln dabei ihre Belegung der zur Verfügung stehenden Zeitschlitze aus, damit ein kollisionsfreier Austausch der Daten ermöglicht wird. Damit stellt das AIS lediglich ein lokales Funksystem dar, das zwar für ein auf hoher See befindliches Schiff ausreichend Daten zur Verfügung stellt, jedoch als übergeordnetes Kommunikationsmittel wenig geeignet zu sein scheint.

Demnach ist es mit Hilfe von AIS-Küstenstationen nur innerhalb eines kleinen Küstenbereiches möglich, den Schiffen mit Hilfe von AIS-Funksignalen Nachrichten zu übermitteln. Außerhalb dieser Regionen oder in Gegenden, wo sich derartige AIS-Küstenstationen geopolitisch oder aus wirtschaftlichen Gründen nicht lohnen, ist eine Übertragung von Nachrichten an die Schiffe nur begrenzt möglich. So können zwar einige Schiffe mit Hilfe von Kommunikationsmitteln, wie beispielsweise Iridium oder INMARSAT C Daten empfangen. Allerdings ist sowohl die Anschaffung dieser Kommunikationsgeräte als auch deren Einsatz sehr kostspielig, so dass sich dieser Kommunikationsweg lediglich für Notfälle eignet.

Die Veröffentlichung WO 2007/143478 A2 offenbart ein AIS-basiertes Überwachungssystem für Schiffe gemäß der Präambel des Anspruchs 1, bei dem Flugobjekte mit AIS-Empfängern zum Empfang von Schiffsdaten ausgestattet sind, wobei die Schiffsdaten über andere Übertragungskanäle an andere Schiffe übertragen werden.

Es ist daher Aufgabe der vorliegenden Erfindung ein verbessertes System anzugeben, mit dem Nachrichten, Daten oder Informationen auch an Schiffe auf hoher See übertragen werden können, ohne dass hierfür der gesamte internationale Schiffsverkehr mit neuen Kommunikationsmitteln ausgerüstet werden muss.

Die Aufgabe wird mit dem Unterstützungssystem der eingangs genannten Art erfindungsgemäß dadurch gelöst, dass mindestens ein Flugobjekt vorgesehen ist, dass zumindest eine AIS-Flugsendeeinheit, die zum Aussenden von Schiffsverkehrsdaten enthaltenden AIS-Funksignalen innerhalb eines AIS-Sendebereiches derart eingerichtet ist, dass die ausgesendeten AIS-Funksignale von dem innerhalb des AIS-Sendebereiches befindlichen Schiffen durch ihre jeweiligen AIS-Schiffsempfangseinheiten empfangbar sind. Erfindungsgemäß wird somit vorgeschlagen, dass das Überwachungssystem zumindest ein Flugobjekt aufweist, an dem zumindest eine AIS-Flugsendeeinheit angeordnet ist. Die AIS-Flugsendeeinheit ist eingerichtet, AIS-Funksignale innerhalb eines AIS-Sendebereiches auszusenden, und zwar derart, dass die den Sendebereich ausgesendeten AIS-Funksignale von den AIS-Schiffsempfangseinheiten, die auf den Schiffen angeordnet sind, empfangen werden können, wenn sich die Schiffe innerhalb des Sendebereiches der an dem Flugobjekt angeordneten AIS-Flugsendeeinheit befinden.

Flugobjekte im Sinne der vorliegenden Erfindung sind vorteilhafterweise Satelliten oder Flugzeuge mit sehr hohen Reiseflughöhen, wie beispielsweise Verkehrsflugzeuge, die in der Regel über 3.000 Meter fliegen.

Aufgrund der ernormen Höhe der AIS-Flugsendeeinheit wird es möglich, Schiffsverkehrsdaten an eine Vielzahl von Schiffen mit Hilfe des AIS zu übertragen, da aufgrund der Höhe sich ein sehr großer und zu der Höhe proportionaler Sendebereich ergibt. So können aufgrund des großen Sendebereiches eine Vielzahl von Schiffen unterschiedlichster AIS-Funkzellen angesprochen werden, ohne dass es hierfür zusätzlicher Kommunikationsmittel auf dem Schiff bedarf. Denn Schiffe über 300 BRZ brutto Registertonnen sind heutzutage verpflichtet, standardmäßig einen AIS-Transponder sowie eine entsprechende AIS-Empfangseinheit mitzuführen.

So können beispielsweise aktuelle Verkehrsdaten, Umweltdaten wie beispielsweise Sichtweiten, Windwerte oder Pegelstände, Revierdaten wie beispielsweise bei Bagger- und Peilarbeiten, Schiffsbewegungen von Liegestellen, usw. sowie Wetterinformationen wie die Luft- und Wassertemperatur, Windgeschwindigkeit und dergleichen gleichzeitig an eine Vielzahl von Schiffen übertragen werden, die sich außerhalb der herkömmlichen und standardgemäßen Überwachungssysteme wie Radar oder Küsten-AIS befinden. Somit werden mit Hilfe des AIS nicht mehr nur Informationen bezüglich des eigenen Schiffes von Schiff zu Schiff übertragen, sondern übergeordneten Informationen über die Verkehrs-, Wetter- oder Revierlage übermittelt, die dann von den Schiffen des Sendebereiches empfangen und ausgewertet werden können.

Dadurch erhöht sich signifikant das Situations- und Lagebewusstsein der einzelnen Schiffe auch in Reisegebieten, die fernab der Zivilisation nur wenige erreichbare Informationsquellen bieten.

Mit Hilfe einer an dem Flugobjekt angeordneten Kommunikationseinheit werden beispielsweise von einer Bodenstation aus entsprechende Schiffsverkehrsdaten an das Flugobjekt übertragen, damit diese dann an die Schiffe mit Hilfe des AIS weitergeleitet werden können. Durch die zentrale Verwaltung in einer Bodenstation wird es möglich, verschiedene Datenquellen beziehungsweise Informationsquellen für die Bereitstellung der Schiffsverkehrsdaten anzuzapfen. Über die Kommunikationseinheit auf dem Flugobjekt und einer entsprechenden Einheit an der Bodenstation können dann, auch unter Zwischenschaltung von Zwischenstationen, diese in der Bodenstation bereitgestellten Schiffsverkehrsdaten zur Übertragung an die Schiffe mit Hilfe der AIS-Flugsendeeinheit verwendet werden.

Vorteilhafterweise weist das Unterstützungssystem mindestens eine Datenauswahleinheit auf, die zum Auswählen von auszusendenden Schiffsverkehrsdaten in Abhängigkeit von einer Position des AIS-Sendebereiches der mindestens einen AIS-Flugsendeeinheit eingerichtet ist. Somit lassen sich gezielt, den aktuellen Sendebereich betreffende Schiffsverkehrsdaten an die in diesen Sendebereich befindlichen Schiffe mit Hilfe des AIS übertragen, so dass ganz gezielt dedizierte AIS-Nachrichten an die Schiffe übertragen werden können. Die diesen aktuellen Sendebereich nicht tangierenden Schiffsverkehrsdaten werden dabei herausgefiltert.

Denkbar ist aber auch, dass die Datenauswahleinheit zum Auswählen von ausgesendeten Schiffsverkehrsdaten in Abhängigkeit von einer Priorität der hinterlegten Schiffsverkehrsdaten ausgebildet ist. Dadurch lassen sich beispielsweise See-Notfallmeldungen priorisiert an eine Vielzahl von Schiffen übertragen, die dann selbstständig entscheiden können, wie sie mit dem Seenotfall umgehen.

Des Weiteren ist es ganz besonders vorteilhaft, wenn mindestens ein Flugobjekt, neben der AIS-Flugsendeeinheit, zusätzlich eine AIS-Flugempfangseinheit aufweist, die zum Empfangen von AIS-Funksignalen innerhalb eines AIS-Empfangsbereiches eingerichtet ist. Bevorzugt ist der AIS-Empfangsbereich deckungsgleich mit dem AIS-Sendebereich. Das Unterstützungssystem weist nunmehr weiterhin eine Datenverarbeitungseinheit auf, die eingerichtet ist, aus den empfangenen AIS-Funksignalen die darin enthaltenen Schiffsverkehrsdaten zu extrahieren und aus einer Vielzahl von in einem Datenzwischenspeicher hinterlegten Schiffsverkehrsdaten auszusendende Schiffsverkehrsdaten in Abhängigkeit von den extrahierten Schiffsverkehrsdaten auszuwählen, so dass die AIS-Flugsendeeinheit entsprechende AIS-Funksignale aussenden kann, die zumindest die von der Datenverarbeitungseinheit ausgewählten Schiffsverkehrsdaten enthalten. Dadurch wird es beispielsweise möglich, dass aufgrund empfangener Positionsmeldungen und Fahrtrichtungen, die als Schiffsverkehrsdaten in den AIS-Funksignalen enthalten sind, entsprechende Vorausberechnungen durchzuführen, auf deren Basis dann beispielsweise vorzeitige Warnungen oder andere Verkehrsdaten an die Schiffe ausgesendet werden können. So ist es beispielsweise denkbar, dass Wetterwarnungen oder Warnungen über Untiefen, Eisberge oder Piraten in Abhängigkeit von der Position und der Fahrtrichtung der Schiffe ausgegeben werden.

Sowohl die Datenauswahleinheit als auch die Datenverarbeitungseinheit können direkt auf dem Flugobjekt angeordnet werden, um die Daten direkt vor Ort zu prozessieren. Denkbar ist aber auch, dass die Datenauswahleinheit beziehungsweise Datenverarbeitungseinheit an der Bodenstation angeordnet ist und dann nur entsprechende ausgewählte Schiffsverkehrsdaten über den Kommunikationsweg zwischen Bodenstation und Flugobjekt übertragen werden.

Weiterhin ist es ganz besonders vorteilhaft, wenn eine AIS-Verschlüsselungseinheit zum Verschlüsseln zumindest eines Teils der auszusendenden Schiffsverkehrsdaten vorgesehen ist, so dass sicherheitsrelevante Daten an die Schiffe ausgesendet werden können, die nur von einem bestimmten Teil der Schiffe dechiffrierbar ist. Somit können gezielt bestimmte Informationen an ausgewählte Schiffe übertragen werden.

Des Weiteren ist es überaus vorteilhaft, wenn das mindestens eine Flugobjekt eine Empfangseinheit hat, die zum Empfangen einer Bestätigungsnachricht ausgebildet ist, die von einem Schiff nach Empfang einer an das Schiff adressierten AIS-Nachricht ausgesendet wurde. So ist es beispielsweise denkbar, dass spezielle AIS-Nachrichten mit AIS-Schiffsverkehrsdaten über die AIS-Flugsendeeinheit ausgesendet werden, die nur an ein spezielles beziehungsweise selektiertes Schiff gerichtet sind, beispielsweise mittels einer Verschlüsselung oder einer entsprechenden ID-Adressierung. Hat das Schiff diese spezielle AIS-Nachricht empfangen, so kann es eine Bestätigungsnachricht zurücksenden, die dann von dem Flugobjekt empfangbar ist. Somit kann sichergestellt werden, dass diese an das selektierte Schiff adressierte Nachricht auch tatsächlich von diesem empfangen wurde. Diese Bestätigungsnachricht kann dann beispielsweise über den Kommunikationsweg zur Bodenstation zurückgesendet werden.

Des Weiteren ist besonders vorteilhaft, wenn das Unterstützungssystem eine Mehrzahl von Flugobjekten hat, die jeweils zumindest eine AIS-Flugsendeeinheit aufweisen. Die durch die jeweiligen AIS-Flugsendeeinheiten definierten AIS-Sendebereiche bilden dann in der Summe einen großen gemeinsamen AIS-Sendebereich, in dem dann Schiffsverkehrsdaten an die betroffenen Schiffe ausgesendet werden können. Somit lässt sich ein wesentlich größerer Abdeckungsbereich erreichen.

Die Erfindung wird im übrigen auch mit dem Verfahren der eingangs genannten Art erfindungsgemäß gelöst durch Aussenden von Schiffsverkehrsdaten enthaltenden AIS-Flugsignalen durch eine auf einem Flugobjekt angeordneten AIS-Flugsendeeinheit innerhalb eines AIS-Sendebereiches derart, dass die ausgesendeten AIS-Funksignale von den innerhalb des AIS-Sendebereiches befindlichen Schiffe durch ihre jeweiligen AIS-Schiffsempfangseinheiten empfangbar sind.

Vorteilhafte Ausgestaltungen des Verfahrens finden sich in den entsprechenden Unteransprüchen.

Die Erfindung wird anhand der beigefügten Figuren beispielhaft näher erläutert. Es zeigen:
- Figur 1: - schematische Darstellung eines Flugobjektes mit den entsprechenden Einheiten;
- Figur 2: - Anwendungsbeispiel auf hoher See.

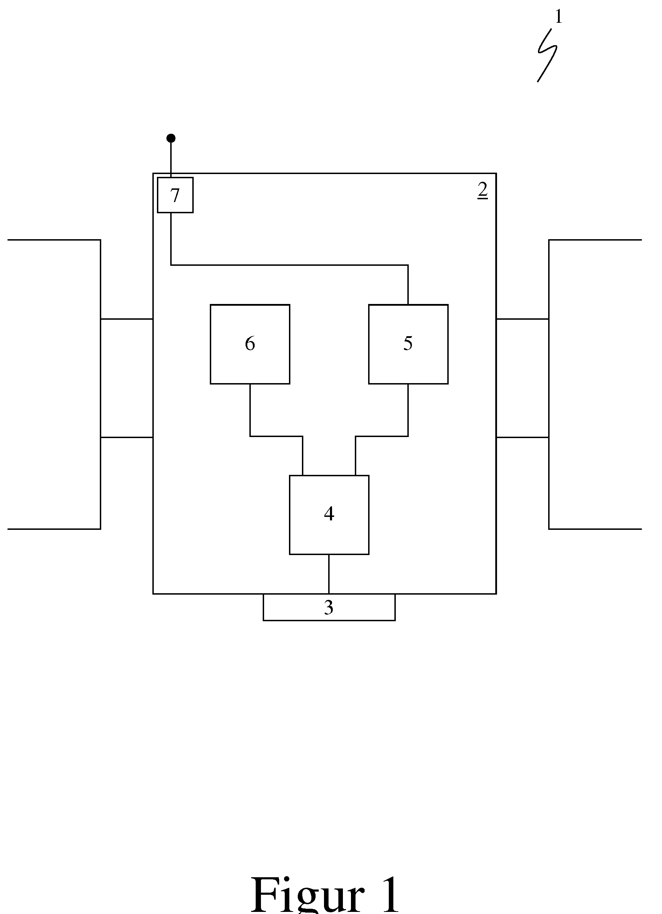

Figur 1 zeigt schematisch das Unterstützungssystem 1 mit einem Flugobjekt 2, das in diesem Ausführungsbeispiel als Satellit ausgebildet ist. Satelliten haben hierbei den Vorteil, dass sie zum einen auf vorher festgelegten und berechenbaren Trajektorien ihre Bahnen ziehen, so dass zu jedem Zeitpunkt der Empfangs- und Sendebereich des Satelliten ermittelbar ist. Zum anderen haben Satelliten den Vorteil, dass sie aufgrund ihrer entsprechenden Flughöhe einen sehr großen Sende- und/oder Empfangsbereich abdecken können.

Der Satellit 2 weist eine AIS-Sende- und/oder Empfangseinheit 3 auf, die in Richtung Erdoberfläche ausgerichtet ist und somit einen Sendebereich und/oder Empfangsbereich in Richtung Erdoberfläche bildet. An die AIS-Sende- und/oder Empfangseinheit 3 schließt sich eine Verschlüsselungseinheit 4 an, mit der AIS-Nachrichten bzw. Schiffsverkehrsdaten verschlüsselt werden können, so dass sie mit Hilfe der AIS-Sendeeinheit 3 mittels der AIS-Funksignale verschlüsselt an die Schiffe ausgesendet werden können. Gleiches gilt auch für den Rückweg, so dass die Schiffe ihre Daten ebenfalls verschlüsselt zurücksenden können, die dann mit Hilfe der Verschlüsselungseinheit 4 entschlüsselt werden können.

An die Verschlüsselungseinheit 4 schließt sich sodann sowohl eine Datenauswahleinheit 5 als auch eine Datenverarbeitungseinheit 6 an. Die Datenauswahleinheit 5 ist hierbei eingerichtet, in Abhängigkeit der Position des AIS-Sendebereiches, der von der AIS-Sendeeinheit 3 in Richtung Erdoberfläche aufgespannt wird, die auszusendenen Schiffsverkehrsdaten aus einer Vielzahl von hinterlegten Schiffsverkehrsdaten auszuwählen. Der Datenzwischenspeicher kann hierbei auf dem Satelliten 2 direkt angeordnet werden oder in einer Bodenstation (nicht dargestellt), von wo aus die Daten dann bei Bedarf abgerufen werden.

Mit Hilfe der Datenauswahleinheit 5 wird es nunmehr möglich, dass den Schiffen dedizierte Nachrichten bzw. Schiffsverkehrsdaten zur Verfügung gestellt werden, die ihre tatsächliche Situation betreffen. So können je nach Position des Sendebereiches Wetterdaten übermittelt werden, die sich ausschließlich auf den Sendebereich beziehen. Denkbar ist auch, dass entsprechende Revierdaten übertragen werden, wie beispielsweise Pegelstände, Anzahl der freien Liegeplätze und dergleichen. Verschiebt sich der Sendebereich kontinuierlich in eine Richtung, so können die auszusendenden Schiffsverkehrsdaten kontinuierlich an die sich ändernde Position angepasst werden.

Die ebenfalls in dem Satelliten 2 angeordnete Datenverarbeitungseinheit 6 ist darüber hinaus eingerichtet, in Abhängigkeit von empfangenen Schiffsverkehrsdaten, die von den Schiffen im Empfangsbereich der AIS-Empfangseinheit 3 ausgesendet wurden, entsprechende auszusendende Schiffsverkehrsdaten aus einer Vielzahl von in einem Zwischenspeicher hinterlegten Schiffsverkehrsdaten auszuwählen. Somit kann in Abhängigkeit von den Informationen, die die Schiffe selber zur Verfügung stellen, diejenigen Daten ausgewählt und den Schiffen zugesandt werden, die für sie auch besonders vorteilhaft sind. So ist es beispielsweise denkbar, dass die auszusendenden Schiffsverkehrsdaten, wie beispielsweise Wetterinformationen, anhand der Positionsdaten und der Fahrtrichtung sowie Fahrtgeschwindigkeit ausgewählt werden, so dass den Schiffen ein vorausschauendes Lagebild der kommenden Wettersituation dargeboten werden kann.

Sowohl die Datenauswahleinheit 5 als auch die Datenverarbeitungseinheit 6 ist des Weiteren mit einer Kommunikationseinheit 7 signaltechnisch verbunden, die einen Kommunikationslink zu einer Bodenstation (nicht dargestellt) direkt oder unter Zwischenschaltung weiterer Satelliten oder Flugobjekten herstellen kann. So können dem Satelliten 2 permanent wichtige Daten zur Verfügung gestellt werden, die dann durch die Einheiten 5 und 6 bei der Auswahl mit berücksichtigt werden können. Hierdurch wird es möglich, dass von einer zentralen Stelle aus allen Schiffen im internationalen Reiseverkehr entsprechende Informationen zur Verfügung gestellt werden können, die ansonsten aufgrund ihrer Entfernung von entsprechenden Kommunikationsinfrastruktureinrichtungen nicht in der Lage wären, diese Datenquellen entsprechend zu benutzen. Es kann somit eine Vielzahl von Schiffen mit einem derartigen Unterstützungssystem 1 erreicht werden.

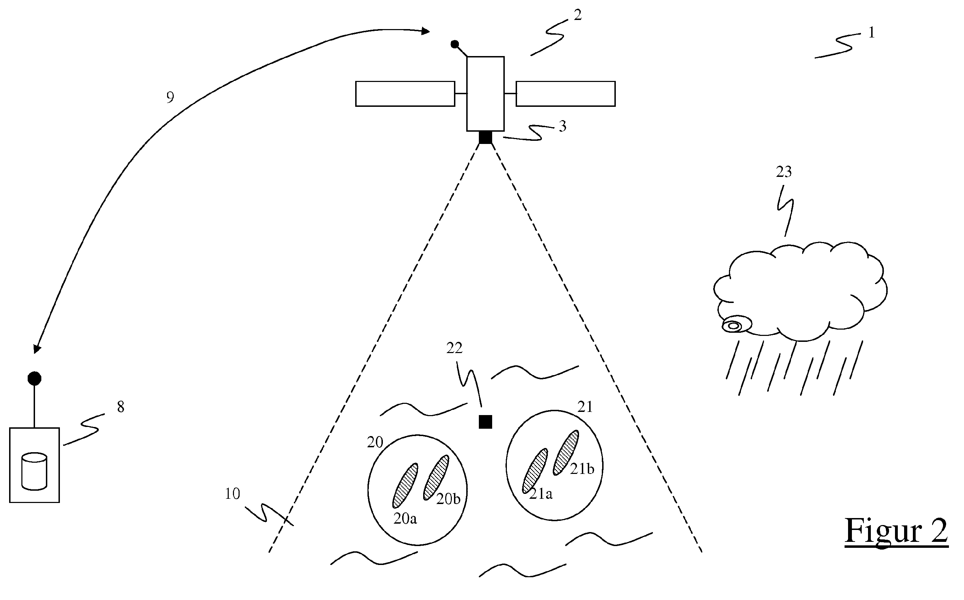

Figur 2 zeigt das Unterstützungssystem 1 mit dem Satelliten 2 und einer Bodenstation 8 in einem Anwendungsfall. Die Sende- und/oder Empfangseinheit 3 ist in Richtung Erdoberfläche ausgerichtet und bildet einen Sendebereich 10. Dieser AIS-Sendebereich 10 ist im Ausführungsbeispiel der Figur 2 deckungsgleich mit dem Empfangsbereich der Sende- und/oder Empfangseinheit 3.

Im Sendebereich 10 befinden sich vier Schiffe, die mit der AIS-Technik ausgerüstet sind. Die Schiffe 20a und 20b bilden dabei eine Funkzelle 20, während die Schiffe 21 a und 21 b eine zweite AIS-Funkzelle 21 bilden. Aufgrund der Entfernungen der ersten Gruppe von Schiffen 20a und 20b zu der zweiten Gruppe von Schiffen 21 a und 21 b können sich diese Schiffe der jeweiligen Gruppen untereinander nicht sehen und somit auch keine Daten untereinander austauschen. Vielmehr sind die Schiffe darauf beschränkt innerhalb ihrer Funkzelle 20 und 21 und die in ihrer jeweiligen AIS-Funkzelle 20 und 21 befindlichen Schiffe und ihre Daten zu empfangen.

In der Bodenstation 8 werden nun aus verschiedensten Datenquellen entsprechende Informationen gesammelt und aufbereitet, wie beispielsweise Wetterinformationen, Umweltinformationen, Piratengebiete, Revierdaten und aktuelle Verkehrsdaten, wie Verkehrsdichte in Küstenbereichen oder dergleichen. Über einen entsprechenden Kommunikationslink 9 werden diese Daten von der Bodenstation 8 auf den Satelliten 2 übertragen. Um ein möglichst großes Gebiet abzudecken, ist es selbstverständlich denkbar, dass eine Vielzahl von derartigen Satelliten in entsprechenden Umlaufbahnen ihre Bahnen ziehen, so dass diese Daten vielen dieser Satelliten oder Flugobjekten zur Verfügung gestellt werden können. Aus Übersichtlichkeitsgründen ist hier jedoch nur ein Satellit 2 dargestellt.

In einer anderen Ausführungsform ist es denkbar, dass anstelle von Satelliten Flugzeuge, wie beispielsweise Verkehrsflugzeuge, verwendet werden, die dann auf einer entsprechend hohen Flughöhe bzw. Reiseflughöhe ein mehr oder weniger großes Sendegebiet abdecken können.

Die von der Bodenstation 8 über den Kommunikationslink 9 empfangenen Schiffsverkehrsdaten werden nun mit Hilfe der Datenauswahleinheit entsprechend derart aufbereitet, dass diejenigen Schiffsverkehrsdaten für die im Sendebereich 10 befindlichen Schiffe 20a, 20b, 21 a, 21 b ausgewählt werden, die für diese Schiffe relevant sind. Dies könnten beispielsweise jene Schiffsverkehrsdaten sein, die ausschließlich im Bereich des Sendebereiches 10 liegen. Beispielhaft sei dies an einem Eisberg 22, der sich im Sendebereich 10 befindet, dargestellt. Für die Schiffe im Sendebereich 10 ist es wichtig, die Position des Eisberges 22 zu kennen. Schiffe, die sich jedoch weit außerhalb dieses Sendebereiches 10 befinden, und somit auch sehr weit von dieser Untiefe 22 entfernt sind, haben jedoch weniger Interesse daran, mit derartigen Informationen versorgt zu werden, was schnell zu einer Informationsüberflutung führen kann.

Des Weiteren befindet sich außerhalb des Sendebereiches 10 ein Unwetter 23, dessen Position und Vorhandensein ebenfalls von der Datenauswahleinheit 5 auf dem Satelliten gefiltert wird, da es sich nicht im Sendebereich 10 befindet.

Nun ist es jedoch denkbar, dass beispielsweise die Schiffe 21 a und 21 b der AIS-Funkzelle 21 in Richtung dieses Unwetters unterwegs sind, so dass es für diese Gruppe von Schiffen durchaus sinnvoll sein kann, ihnen die Information und Kenntnis über das Unwetter 23 mitzuteilen, auch wenn sich dieses noch nicht im Sendebereich 10 befindet. Aufgrund der Tatsache, dass die Schiffe im Sendebereich 10 permanent ihre eigenen Schiffsdaten über das an ihnen angeordnete AIS aussenden, kann dies von der Empfangseinheit 3 an dem Satelliten 2 erfasst werden und von der Datenverarbeitungseinheit 6 extrahiert werden, so dass sich die Position, Fahrtrichtung und gegebenenfalls auch Geschwindigkeit der Schiffe im Sendebereich 10 erfassen lassen. Aus diesen Informationen lässt sich dann ableiten, welche Schiffe gegebenenfalls auf das Unwetter 23 außerhalb des Sendebereiches 10 treffen werden.

Aufgrund dieser Datenprozessierung wird es somit möglich, weitere Informationen bzw. Schiffsverkehrsdaten den Schiffen im Sendebereich 10 zur Verfügung zu stellen, die möglicherweise für einige Schiffe des Sendebereiches 10 relevant sein können. Die Feststellung hierüber, welche Schiffsverkehrsdaten ausgewählt und möglicherweise relevant sein können, wird anhand der von den Schiffen selber ausgesendeten Daten ermittelt, insbesondere anhand von Positions- und Fahrtrichtungsinformationen.

Weiterhin ist es mit Hilfe eines solchen Unterstützungssystems 1 möglich, Notfallnachrichten schnell an eine Vielzahl von Schiffen zu übertragen, wenn sich beispielsweise im Sendebereich 10 ein havariertes Schiff befindet. Auch wenn die Schiffe, die dem havarierten Schiff zur Hilfe eilen könnten, außerhalb des Sendebereiches des havarierten Schiffes liegen, kann die Information über das havarierte Schiff mit Hilfe des vorliegenden Unterstützungssystem 1 dennoch an die Schiffe übertragen werden, da der Sendebereich 10 einen wesentlich größeren "Foot Print" abdeckt, als dies gemein hin durch die einzelnen Schiffe und ihre AIS-Funkzellen möglich wäre.

## Patentansprüche

1. Unterstützungssystem (1) zur Verkehrsunterstützung von Schiffen (20a, 20b, 21 a, 21 b), die AIS-Schiffsempfangseinheiten zum Empfangen von Schiffsverkehrsdaten enthaltenden AIS-Funksignalen aufweisen, wobei mindestens ein Flugobjekt (2) vorgesehen ist,
**dadurch gekennzeichnet, dass** das mindestens eine Flugobjekt (2) zumindest eine AIS-Flugsendeeinheit (3) aufweist, die zum Aussenden von Schiffsverkehrsdaten enthaltenden AIS-Funksignalen innerhalb eines AIS-Sendebereiches (10) derart eingerichtet ist, dass die ausgesendeten AIS-Funksignale von den innerhalb des AIS-Sendebereiches (10) befindlichen Schiffen (20a, 20b, 21 a, 21 b) durch ihre jeweiligen AIS-Schiffsempfangseinheiten empfangbar sind.

2. Unterstützungssystem (1) nach Anspruch 1, **dadurch gekennzeichnet, dass** das Unterstützungssystem (1) mindestens eine Datenauswahleinheit (5) umfasst, die aus einer Vielzahl von in einem Datenzwischenspeicher hinterlegten Schiffsverkehrsdaten zum Auswählen von auszusendenden Schiffsverkehrsdaten in Abhängigkeit von einer Position des AIS-Sendebereiches (10) der mindestens einen AIS-Flugsendeeinheit und/oder einer Priorität der hinterlegten Schiffsverkehrsdaten ausgebildet ist, und die AIS-Flugsendeeinheit (3) zum Aussenden von AIS-Funksignalen, die zumindest die von der Datenauswahleinheit (5) ausgewählten Schiffsverkehrsdaten enthalten, eingerichtet ist.

3. Unterstützungssystem (1) nach Anspruch 1 oder 2, **dadurch gekennzeichnet, dass** das mindestens eine Flugobjekt (2) eine AIS-Flugempfangseinheit (3) aufweist, die zum Empfangen von Schiffsverkehrsdaten enthaltenden AIS-Funksignalen innerhalb eines AIS-Empfangsbereiches (10) eingerichtet ist, und das Unterstützungssystem (1) weiterhin eine Datenverarbeitungseinheit (6) umfasst, die eingerichtet ist,
- aus den mittels der AIS-Flugempfangseinheit empfangenen AIS-Funksignalen die darin enthaltenen Schiffsverkehrsdaten zu extrahieren und
- aus einer Vielzahl von in einem Datenzwischenspeicher hinterlegten Schiffsverkehrsdaten auszusendende Schiffsverkehrsdaten in Abhängigkeit von den aus den empfangenen AIS-Funksignalen extrahierten Schiffsverkehrsdaten auszuwählen,
wobei die AIS-Flugsendeeinheit zum Aussenden von AIS-Funksignalen, die zumindest die von der Datenverarbeitungseinheit (6) ausgewählten Schiffsverkehrsdaten enthalten, eingerichtet ist.

4. Unterstützungssystem (1) nach einem der vorhergehenden Ansprüche, **dadurch gekennzeichnet, dass** zumindest eine AIS-Verschlüsselungseinheit (4) zum Verschlüsseln zumindest eines Teils der auszusendenden Schiffsverkehrsdaten vorgesehen ist und die AIS-Flugsendeeinheit (3) zum Aussenden von AIS-Funksignalen, die zumindest die verschlüsselten Schiffsverkehrsdaten enthalten, eingerichtet ist.

5. Unterstützungssystem (1) nach einem der vorhergehenden Ansprüche, **dadurch gekennzeichnet, dass** das mindestens eine Flugobjekt (2) eine Empfangseinheit hat, die zum Empfang einer Bestätigungsnachricht ausgebildet ist, die von einem Schiff nach Empfang einer an das Schiff adressierten AIS-Nachricht ausgesendet wurde.

6. Unterstützungssystem (1) nach einem der vorhergehenden Ansprüche, **dadurch gekennzeichnet, dass** das mindestens eine Flugobjekt (2) eine Kommunikationseinheit (7) zum Senden und/oder Empfangen von Schiffsverkehrsdaten an eine und/oder von einer Bodenstation (8) oder Satelliten aufweist.

7. Unterstützungssystem (1) nach einem der vorhergehenden Ansprüche, **dadurch gekennzeichnet, dass** eine Mehrzahl von Flugobjekten vorgesehen sind, die jeweils zumindest eine AIS-Flugsendeeinheit und/oder AIS-Flugempfangseinheit zum Aussenden und/oder Empfangen von AIS-Funksignalen aufweisen, wobei die AIS-Sendebereiche und/oder AIS-Empfangsbereiche der jeweiligen AIS-Flugsendeeinheiten und/oder AIS-Flugempfangseinheiten zusammen einen gemeinsamen Sendebereich und/oder Empfangsbereich bilden.

8. Verfahren zur Verkehrsunterstützung von Schiffe, die AIS-Schiffsempfangseinheiten zum Empfangen von Schiffsverkehrsdaten enthaltenden AIS-Funksignalen aufweisen, **gekennzeichnet durch** Aussenden von Schiffsverkehrsdaten enthaltenden AIS-Funksignalen **durch** eine auf einem Flugobjekt angeordnete AIS-Flugsendeeinheit innerhalb eines AIS-Sendebereiches derart, dass die ausgesendeten AIS-Funksignale von den innerhalb des AIS-Sendebereiches befindlichen Schiffen **durch** ihre jeweiligen AIS-Schiffsempfangseinheiten empfangbar sind.

9. Verfahren nach Anspruch 8, **gekennzeichnet durch** Auswählen von auszusendenden Schiffsverkehrsdaten aus einer Vielzahl von in einen Datenzwischenspeicher hinterlegten Schiffsverkehrsdaten in Abhängigkeit von einer Position des AIS-Sendebereiches der AIS-Flugsendeeinheit **durch** eine Datenauswahleinheit und Aussenden von AIS-Funksignalen, die zumindest die von der Datenauswahleinheit ausgewählten Schiffsverkehrsdaten enthalten, **durch** die AIS-Flugsendeeinheit.

10. Verfahren nach Anspruch 8 oder 9, **gekennzeichnet durch** die Schritte:
- Empfangen von Schiffsverkehrsdaten enthaltenden AIS-Funksignalen **durch** eine auf dem Flugobjekt angeordneten AIS-Flugempfangseinheit innerhalb eines AIS-Empfangsbereiches,
- Extrahieren der in den empfangenen AIS-Funksignalen enthaltenen Schiffsverkehrsdaten **durch** eine Datenverarbeitungseinheit,
- Auswählen von auszusendenden Schiffsverkehrsdaten aus einer Vielzahl von in einem Datenzwischenspeicher hinterlegten Schiffsverkehrsdaten in Abhängigkeit von den aus den empfangenen AIS-Funksignalen extrahierten Schiffsverkehrsdaten **durch** die Datenverarbeitungseinheit, und
- Aussenden von AIS-Funksignalen, die zumindest die von der Datenverarbeitungseinheit ausgewählten Schiffsverkehrsdaten enthalten, **durch** die AIS-Flugsendeeinheit.

11. Verfahren nach einem der Ansprüche 8 bis 10, **gekennzeichnet durch** Verschlüsseln zumindest eines Teils der auszusenden Schiffsverkehrsdaten **durch** eine Verschlüsselungseinheit und Aussenden von AIS-Funksignalen, die zumindest die verschlüsselten Schiffsverkehrsdaten enthalten, **durch** die AIS-Flugsendeeinheit.

12. Verfahren nach einem der Ansprüche 8 bis 11, **gekennzeichnet durch** Aussenden von AIS-Funksignalen, die zumindest eine an ein bestimmtes Schiff adressierte AIS-Nachricht als Schiffsverkehrsdaten enthalten, **durch** die AIS-Flugsendeeinheit und Empfangen einer von dem betreffenden Schiff ausgesendeten Bestätigungsnachricht **durch** eine auf dem Flugobjekt angeordnete Empfangseinheit, wenn das betreffende Schiff die AIS-Nachricht empfangen hat.

13. Verfahren nach einem der Ansprüche 8 bis 12, **gekennzeichnet durch** Übertragen von empfangenen Schiffsverkehrsdaten an eine Bodenstation durch eine auf dem Flugobjekt angeordnete Kommunikationseinheit und/oder Empfangen von Schiffsverkehrsdaten von einer Bodenstation durch die Kommunikationseinheit direkt oder unter Verwendung von Zwischenstationen.

14. Verwendung eines Flugobjektes als AIS-Sendestation durch eine auf dem Flugobjekt angeordnete AIS-Funksendeeinheit, die zum Aussenden von Schiffsverkehrsdaten enthaltenden AIS-Funksignalen innerhalb eines AIS Sendebereichs derart ausgerichtet ist, dass die ausgesendeten AIS-Funksignale von den innerhalb des AIS-Sendebereichs befindlichen Schiffen durch ihre jeweiligen AIS-Schiffsempfangseinheiten empfangbar sind.

## Claims

1. Support system (1) for traffic support for ships (20a, 20b, 21 a, 21 b) that have AIS ship reception units for receiving AIS radio signals containing shipping traffic data, wherein at least one flying object (2) is provided, **characterized in that** the at least one flying object (2) has at least one AIS flying transmission unit (3) that is set up to transmit AIS radio signals containing shipping traffic data within an AIS transmission range (10) such that the transmitted AIS radio signals can be received by the ships (20a, 20b, 21 a, 21 b) situated within the AIS transmission range (10) by virtue of the respective AIS ship reception units of said ships.

2. Support system (1) according to claim 1, **characterized in that** the support system (1) comprises at least one data selection unit (5) that is designed to select shipping traffic data to be transmitted from a multiplicity of shipping traffic data stored in a data buffer store on the basis of a position of the AIS transmission range (10) of the at least one AIS flying transmission unit and/or a priority of the stored shipping traffic data, and the AIS flying transmission unit (3) is set up to transmit AIS radio signals that contain at least the shipping traffic data selected by the data selection unit (5).

3. Support system (1) according to claim 1 or 2, **characterized in that** the at least one flying object (2) has an AIS flying reception unit (3) that is set up to receive AIS radio signals containing shipping traffic data within an AIS reception range (10), and the support system (1) furthermore comprises a data processing unit (6) that is set up
- to extract from the AIS radio signals received by means of the AIS flying reception unit the shipping traffic data contained in said AIS radio signals and
- to select shipping traffic data to be transmitted from a multiplicity of shipping traffic data stored in a data buffer store on the basis of the shipping traffic data extracted from the received AIS radio signals,
wherein the AIS flying transmission unit is set up to transmit AIS radio signals that contain at least the shipping traffic data selected by the data processing unit (6).

4. Support system (1) according to one of the preceding claims, **characterized in that** at least one AIS encryption unit (4) is provided for the purpose of encrypting at least a portion of the shipping traffic data to be transmitted, and the AIS flying transmission unit (3) is set up to transmit AIS radio signals that contain at least the encrypted shipping traffic data.

5. Support system (1) according to one of the preceding claims, **characterized in that** the at least one flying object (2) has a reception unit that is designed to receive a confirmation message that has been transmitted by a ship following reception of an AIS message addressed to the ship.

6. Support system (1) according to one of the preceding claims, **characterized in that** the at least one flying object (2) has a communication unit (7) for sending and/or receiving shipping traffic data to and/or from a ground station (8) or a satellite.

7. Support system (1) according to one or the preceding claims, **characterized in that** a plurality of flying objects are provided that each have at least one AIS flying transmission unit and/or AIS flying reception unit for transmitting and/or receiving AIS radio signals, wherein the AIS transmission ranges and/or AIS reception ranges of the respective AIS flying transmission units and/or AIS flying reception units together form a common transmission range and/or reception range.

8. Method for traffic support for ships that have AIS ship reception units for receiving AIS radio signals containing shipping traffic data, **characterized by** transmission of AIS radio signals containing shipping traffic data by an AIS flying transmission unit arranged on a flying object within an AIS transmission range such that the transmitted AIS radio signals can be received by the ships situated within the AIS transmission range by virtue of the respective AIS ship reception units of said ships.

9. Method according to claim 8, **characterized by** selection of shipping traffic data to be transmitted from a multiplicity of shipping traffic data stored in a data buffer store on the basis of a position of the AIS transmission range of the AIS flying transmission unit by a data selection unit and transmission of AIS radio signals, which contain at least the shipping traffic data selected by the data selection unit, by the AIS flying transmission unit.

10. Method according to claim 8 or 9, **characterized by** the steps of:
- reception of AIS radio signals containing shipping traffic data by an AIS flying reception unit arranged on the flying object within an AIS reception range,
- extraction of the shipping traffic data contained in the received AIS radio signals by a data processing unit,
- selection of shipping traffic data to be transmitted from a multiplicity of shipping traffic data stored in a data buffer store on the basis of the shipping traffic data, extracted from the received AIS radio signals, by the data processing unit, and
- transmission of AIS radio signals, which contain at least the shipping traffic data selected by the data processing unit, by the AIS flying transmission unit.

11. Method according to one of the claims 8 to 10, **characterized by** encryption of at least a portion of the shipping traffic data to be transmitted by an encryption unit and transmission of AIS radio signals, which contain at least the encrypted shipping traffic data, by the AIS flying transmission unit.

12. Method according to one of claims 8 to 11, **characterized by** transmission of AIS radio signals, which contain at least one AIS message addressed to a particular ship as shipping traffic data, by the AIS flying transmission unit and reception of a confirmation message, transmitted by the relevant ship, by a reception unit arranged on the flying object when the relevant ship has received the AIS message.

13. Method according to one of claim 9 to 12, **characterized by** transmission of received shipping traffic data to a ground station by a communication unit arranged on the flying object and/or reception of shipping traffic data from a ground station by the communication unit directly or by using intermediate stations.

14. Use of a flying object as an AIS transmission station by virtue of a AIS radio transmission unit arranged on a flying object that is set up to transmit AIS radio signals containing shipping traffic data within an AIS transmission range such that the transmitted AIS radio signals can be received by the ships situated within the AIS transmission range by virtue of the respective AIS ship reception units of said ships.

## Revendications

1. Système (1) d'assistance au trafic de navires (20a, 20b, 21a, 21b) qui présente des unités embarquées de réception AIS permettant de recevoir des signaux radio AIS contenant des données de trafic de navire, au moins un objet volant (2) étant prévu,
**caractérisé en ce que**
au moins un objet volant (2) présente au moins une unité embarquée (3) d'émission AIS conçue pour émettre à l'intérieur d'une portée d'émission AIS (10) des signaux radio AIS contenant des données de trafic de navires, de telle sorte que les signaux radio AIS émis puissent être reçus par les unités embarquées de réception AIS des navires (20a, 20b, 21a, 21b) situés à l'intérieur de la portée d'émission AIS (10).

2. Système d'assistance (1) selon la revendication 1, **caractérisé en ce que** le système d'assistance (1) comporte au moins une unité (5) de sélection de données qui est configurée pour, à partir de différentes données de trafic de navire conservées dans une mémoire intermédiaire de données, sélectionner des données de trafic de navires à émettre en fonction de la position de la portée d'émission AIS (10) de la ou des unités AIS embarquées dans le ou les objets volants et/ou en fonction d'une priorité des données de trafic de navires conservées en mémoire, l'unité (3) d'émission AIS embarquée dans le ou les objets volants étant conçue pour émettre des signaux radio AIS qui contiennent au moins les données de trafic de navire sélectionnées par l'unité (5) de sélection de données.

3. Système d'assistance (1) selon les revendications 1 ou 2, **caractérisé en ce que** le ou les objets volants (2) présentent une unité embarquée de réception AIS (3) conçue pour recevoir à l'intérieur d'une portée de réception AIS (10) des signaux radio AIS contenant des données de trafic de navire, le système d'assistance (1) comportant en outre une unité (6) de traitement de données conçue pour, à partir des signaux radio AIS reçus au moyen de l'unité de réception AIS embarquée dans le ou les objets volants, extraire les données de trafic de navire qui y sont contenues et pour, à partir de différentes données de trafic de navires conservées dans une mémoire intermédiaire de données, sélectionner des données de trafic de navires à émettre en fonction des données de trafic de navires extraites des signaux radio AIS reçus, l'unité d'émission AIS embarquée sur le ou les objets volants étant conçue pour émettre des signaux radio AIS qui contiennent au moins les données de trafic de navires sélectionnées par l'unité (6) de traitement de données.

4. Système d'assistance (1) selon l'une des revendications précédentes, **caractérisé en ce qu'**au moins une unité (4) de cryptage est prévue pour crypter au moins une partie des données de trafic de navires à émettre, l'unité (3) d'émission AIS embarquée sur le ou les objets volants étant conçue pour émettre des signaux radio AIS qui contiennent au moins les données de trafic de navires cryptées.

5. Système d'assistance (1) selon l'une des revendications précédentes, **caractérisé en ce qu'**au moins un objet volant (2) possède une unité de réception configurée pour recevoir un message de confirmation qui a été émis par un navire après réception d'un message AIS adressé à ce navire.

6. Système d'assistance (1) selon l'une des revendications précédentes, **caractérisé en ce qu'**au moins un objet volant (2) présente une unité de communication (7) qui émet et/ou reçoit des données de trafic de navires vers ou depuis une station (8) au sol ou des satellites.

7. Système d'assistance (1) selon l'une des revendications précédentes, **caractérisé en ce que** plusieurs objets volants sont prévus et présentent chacun au moins une unité embarquée d'émission AIS et/ou une unité embarquée de réception AIS qui émettent et/ou reçoivent des signaux radio AIS, les portées d'émission AIS et/ou les portées de réception AIS des différentes unités d'émission AIS et/ou de réception AIS embarquées sur les objets volants formant ensemble une portée commune d'émission et/ou une portée commune de réception.

8. Procédé d'assistance au trafic de navires qui présentent des unités embarquées de réception AIS qui reçoivent des signaux radio AIS qui contiennent des données de trafic de navires, **caractérisé par** l'émission à l'intérieur d'une portée d'émission AIS de signaux radio AIS contenant des données de trafic de navire par une unité d'émission AIS embarquée sur un objet volant, de telle sorte que les signaux radio AIS émis puissent être reçus par les unités de réception AIS embarquées sur les navires situés à l'intérieur de la portée d'émission AIS.

9. Procédé selon la revendication 8, **caractérisé par** la sélection par une unité de sélection de données de données de trafic de navires à émettre parmi différentes données de trafic de navires conservées dans une mémoire intermédiaire de données, en fonction de la position de la portée d'émission AIS (10) de l'unité AIS embarquée dans le ou les objets volants et par l'émission par l'unité (3) d'émission AIS embarquée dans le ou les objets volants de signaux radio AIS qui contiennent au moins les données de trafic de navire sélectionnées par l'unité de sélection de données.

10. Procédé selon les revendications 8 ou 9, **caractérisé par** les étapes suivantes :
- réception de signaux radio AIS contenant des données de trafic de navire par une unité de réception AIS embarquée sur l'objet volant, à l'intérieur d'une portée de réception AIS,
- extraction par une unité de traitement de données des données de trafic de navire que contiennent les signaux radio AIS reçus,
- sélection par l'unité de traitement de données de données de trafic de navire à émettre parmi plusieurs données de trafic de navire conservées dans une mémoire intermédiaire de données en fonction des données de trafic de navire extraites des signaux radio AIS reçus et
- émission par l'unité d'émission AIS embarquée sur l'objet volant de signaux radio AIS qui contiennent au moins les données de trafic de navire sélectionnées par l'unité de traitement de données,.

11. Procédé selon l'une des revendications 8 à 10, **caractérisé par** le cryptage d'au moins une partie des données de trafic de navire à émettre, par une unité de cryptage, et par l'émission de signaux radio AIS qui contiennent au moins les données de trafic de navire cryptées, par l'unité d'émission AIS embarquée sur l'objet volant.

12. Procédé selon l'une des revendications 8 à 11, **caractérisé par** l'émission de signaux radio AIS qui contiennent au moins un message AIS adressé à un navire défini en tant que données de trafic de navires, par l'unité d'émission AIS embarquée sur l'objet volant, et par la réception d'un message de confirmation émis par le navire concerné par une unité de réception embarquée dans l'objet volant lorsque le navire concerné a reçu le message AIS.

13. Procédé selon l'une des revendications 8 à 12, **caractérisé par** la transmission de données de trafic de navires reçu sur une station au sol par une unité de communication disposée sur l'objet volant et/ou la réception de données de trafic de navire par une station au sol, directement par l'unité de communication ou en recourant à des stations intermédiaires.

14. Utilisation d'un objet volant comme poste d'émission AIS par une unité d'émission radio AIS disposée sur l'objet volant, conçue pour émettre à l'intérieur d'une portée d'émission AIS des signaux radio AIS contenant des données de trafic de navires, de telle sorte que les signaux radio AIS émis puissent être reçus par les unités de réception AIS embarquées sur les navires situés à l'intérieur de la portée d'émission AIS.
